# EUROPÄISCHE PATENTSCHRIFT

(11) **EP 0 559 084 B1**
(45) Veröffentlichungstag und Bekanntmachung des Hinweises auf die Patenterteilung: **22.04.1998**
(21) Anmeldenummer: 93103011.8
(22) Anmeldetag: 26.02.1993
(51) Int. Cl.: A22C 13/00

(54) **Schlauchförmige Nahrungsmittelhülle mit einer Flüssigrauchpräparation**
Tubular food casing treated with liquid smoke
Enveloppe tubulaire pour produits alimentaires, traitée à la fumée liquide

(30) Priorität: 06.03.1992 DE 4207131
(43) Veröffentlichungstag der Anmeldung: 08.09.1993
(73) Patentinhaber: HOECHST AKTIENGESELLSCHAFT, 65926 Frankfurt am Main (DE)
(72) Erfinder: Hammer, Klaus-Dieter, Dr., W-6500 Mainz-Mombach (DE); Mans, Leo, Dr., W-6501 Saulheim (DE); Siebrecht, Manfred, Dr., W-6200 Wiesbaden (DE); Winter, Hermann, W-6200 Wiesbaden (DE)
(74) Vertreter: Zounek, Nikolai, Dipl.-Ing.

(56) Entgegenhaltungen:
- EP-A- 0 088 308
- EP-A- 0 330 996
- EP-A- 0 460 348
- DE-A- 2 813 796
- FR-A- 2 389 543

## Beschreibung

Die Erfindung betrifft eine schlauchförmige Nahrungsmittelhülle, insbesondere Wursthülle, auf Basis von Cellulose mit einer auf ihrer inneren und/oder äußeren Oberfläche aufgebrachten modifizierten Flüssigrauchlösung sowie die Herstellung und Verwendung der Hülle. Weiterhin betrifft die Erfindung die modifizierte Flüssigrauchlösung selbst.

Das Aussehen und der Geschmack von verarbeiteten Fleischprodukten sind ein entscheidender Faktor für deren Erfolg im Handel und beim Verbraucher. Ein gemeinsames Merkmal vieler Sorten von Fleischprodukten ist ein charakteristischer Räuchergeschmack und das damit verbundene geräucherte Aussehen.

Im Stand der Technik sind verschiedene Verfahren beschrieben, welche geeignet sind, dem Nahrungsmittelprodukt dieses Räucheraroma und die entsprechende Farbe zu verleihen. Es ist bekannt, sogenannte Flüssigrauchlösungen in die Fleisch- bzw. Wurstmasse einzuarbeiten oder das Wurstgut mit einer solchen Lösung zu besprühen. Diese herkömmliche Verarbeitung der Flüssigrauchlösung bringt jedoch gewisse Nachteile mit sich, insbesondere eine ungleichmäßige oder mangelhafte Räucherfarbe auf der Oberfläche des Wurstproduktes.

Es sind daher weitere Verfahren entwickelt worden, bei denen die Flüssigrauchlösung auf die innere oder äußere Oberfläche einer schlauchförmigen Nahrungsmittelhülle aufgetragen wird und die gewünschte Räucherfarbe und das Aroma von der Nahrungsmittelhülle auf das Füllgut übertragen werden. Für diese Verfahren sind jedoch die im Handel erhältlichen Flüssigrauchlösungen als solche wegen ihres stark sauren Charakters für Nahrungsmittelhüllen auf Cellulosebasis nicht geeignet.

Es werden im Stand der Technik Zusätze zur Modifizierung der Flüssigrauchlösungen beschrieben, welche einerseits die Nachteile durch den stark sauren Charakter vermeiden und andererseits einen verbesserten Räuchereffekt durch eine gute Übertragung des Aromas und der Farbe von der Hülle auf das Produkt bringen sollen.

Die DE-A-28 13 796 beschreibt die Abmischung von wäßrigen, flüssigen Rauchlösungen mit einem alkalischen Neutralisationsmittel und einem kurzkettigen Alkohol. Das Neutralisationsmittel erhöht den pH-Wert auf über 5, und der kurzkettige Alkohol dient als Lösungsvermittler, der die Abscheidung der Rauchbestandteile aus der alkalischen Lösung verhindert. Cellulosehydrathüllen können mit dieser Lösung präpariert werden, wobei die Nachteile des aciden Mediums durch die Neutralisation verhindert werden, aber die Übertragung des Räucheraromas und der Räucherfarbe von der Hülle auf das Wurstgut ist mangelhaft.

Die US-A-4 446 167 beschreibt Räucherlösungen, welche mit Alkali versetzt werden, bis Rauchbestandteile ausfallen, und die dann solange weiter alkalisiert werden, bis sich der Niederschlag zum wesentlichen Teil wieder auflöst. Hierbei erreichen die Rauchlösungen einen pH-Wert von über 10, auf den Zusatz der vorbeschriebenen Alkohole als Lösungsvermittler kann verzichtet werden. Gegebenenfalls kann die Lösung als Weichmacher Glycerin, Propylenglykol oder Carboxymethylcellulose in einer Menge von bis zu 10 Gew.-% enthalten. Es ist jedoch Vorteil der Erfindung, daß aufgrund des höheren Wassergehaltes Weichmacher wie beispielsweise Propylenglykol gar nicht oder nur in geringen Mengen vorhanden sein müssen.

Die US-A-4 834 993 beschreibt die Auftragung solcher stark alkalisierten Rauchlösungen auf die äußere Oberfläche von Nahrungsmittelhüllen, welche anschliessend gerafft werden. Hierdurch wird eine besonders gleichmäßige Verteilung der Rauchlösung bei den gerafften, präparierten Hüllen gewährleistet. Dies ist gegenüber Hüllen mit gleicher Beschichtung auf der Innenseite vorteilhaft, da die Ansammlung der Flüssigrauchlösung in den Raffalten vermieden wird. Die verwendeten Flüssigrauchlösungen sind wie in der US-A-4 446 167 beschrieben stark alkalisiert, so daß der Zusatz kurzkettiger Alkohole nicht erforderlich ist.

In der FR-A 2 389 543 (= DE-A 28 19 686) ist eine Nahrungsmittelhülle offenbart, auf deren Innen- und/oder Außenseite ein homogenes Gemisch aus nichtmodifiziertem und damit sehr saurem Flüssigrauch und Pektin aufgebracht ist. Das Gemisch hat damit einen pH-Wert von deutlich weniger als 7. Weiterhin kann es Bestandteile anderer Ingredienzien enthalten, beispielsweise verschiedene wasserlösliche oder dispergierbare Materialien, wie kommerzielle Zucker- oder Zuckerersatzlösungen und dergleichen, die zur Einstellung der Viskosität der Mischung dienen, und verschiedene Polyole, Celluloseether, Zuckerarten, Mineralöl, oberflächenaktive Mittel usw., die bekannterweise allgemein zweckmäßig sind, um den Hüllen eine Vielzahl von gewünschten Eigenschaften, etwa verbesserte Raffbarkeit, Abschälbarkeit, Geschmeidigkeit und dergleichen zu verleihen.

Dem Stand der Technik ist zu entnehmen, daß eine besonders gleichmäßige und effektive Übertragung von Raucharoma und -farbe bei der Herstellung von Nahrungsmittelprodukten in flüssigrauchpräparierten Hüllen besonders wünschenswert ist. Alle bisher vorgeschlagenen Verfahren und Mischungen von Flüssigrauchlösungen lassen jedoch in dieser Hinsicht noch stark zu wünschen übrig. Dieses Bedürfnis nach verbesserten Übertragungseigenschaften der Flüssigrauchhüllen geht auch aus solchen Anmeldungen wie der EP-A-0 095 616 hervor, welche eine spezielle Methode zur Extraktion des Räucherfarbstoffes beschreibt, der dann in konzentrierter Form den Flüssigrauchlösungen wieder zugesetzt wird, um eine bessere Rauchfärbung des Nahrungsmittels zu erzielen. Eine bessere Übertragung des Räucheraromas ist von solchen Methoden jedoch sicher nicht zu erwarten.

Es ist daher Aufgabe der vorliegenden Erfindung, die vorbeschriebenen Nachteile der im Stand der Technik bekannten flüssigrauchpräparierten Nahrungsmittelhüllen zu vermeiden. Insbesondere soll eine flüssigrauchpräparierte Nahrungsmittelhülle auf Cellulosebasis zur Verfügung gestellt werden, die eine bessere und eine besonders gleichmäßige Übertragung des Räucheraromas und der Räucherfarbe von der präparierten Hülle auf das Nahrungsmittel gewährleistet, wobei die Hülle gleichzeitig auch die für Koch- und Brühwürste erforderlichen guten Trenneigenschaften der inneren Hüllenoberfläche aufweisen soll.

Weiterhin ist es Aufgabe der Erfindung, eine Flüssigrauchlösung so zu modifizieren, daß sie in größeren Mengen von Cellulosehydrathüllen aufgenommen wird.

Diese Aufgabe wird überraschenderweise durch eine Nahrungsmittelhülle der eingangs genannten Gattung gelöst, die dadurch gekennzeichnet ist, daß die modifizierte Flüssigrauchlösung eine Mischung ist, welche
eine nichtmodifizierte wäßrige Flüssigrauchlösung,
ein alkalisches Neutralisationsmittel in einer solchen Menge, daß die
Mischung einen pH-Wert von 8,5 bis 14 hat,
ein synthetisches und/oder natürliches Öl,
eine viskositätserhöhende Komponente und
einen oder mehrere Emulgator/en
enthält. Mischungen im Sinne der vorliegenden Erfindung enthalten die nichtmodifizierte, wäßrige Flüssigrauchlösung, die durch Zusatz der weiteren obengenannten Bestandteile modifiziert ist. Der Begriff "Mischung" umfaßt somit Emulsionen, echte Lösungen, colloidale Suspensionen und sonstige Mischungsformen der flüssigen Phase.

Bei den erfindungsgemäßen flüssigrauchpräparierten schlauchförmigen Nahrungsmittelhüllen handelt es sich bevorzugt um Wursthüllen, insbesondere wässerungsfreie Wursthüllen. Das Basismaterial für die Nahrungsmittelhüllen sind Cellulosehydratschläuche mit und ohne Faserpapiereinlage (Zellglas, regenerierte Cellulose, Cellulosehydrat), die auf übliche Weise als nahtlose Schläuche durch ringförmige Extrusion und anschließende Koagulation und Regeneration einer Viskoselösung hergestellt werden. Es ist auch möglich, Schläuche mit einer Klebenaht einzusetzen, die durch Falten einer Cellulosebahn und Verbinden der Ränder hergestellt werden (EP-A-0 050 702, EP-A-0 058 240). Für bestimmte Anwendungszwecke verwendet man einen Trägerschlauch aus Cellulose mit einer Faserverstärkung, die beispielsweise in Form einer Papierbahn in der Wandung des Trägerschlauchs eingebettet ist. Zur Herstellung von gekrümmten oder ringförmigen Würsten verwendet man Trägerschläuche auf Cellulosebasis in gekrümmter oder in abgerundeter Ringform, sogenannte Kranzdärme, welche keine Faserverstärkung aufweisen. Die Krümmung wird beispielsweise durch einseitige Verdehnung des Schlauches bei seiner Herstellung erzeugt, es sind aber auch andere Verfahren bekannt (US-A-2 136 566, US-A-2 925 621; US-A-3 679 435, EP-A-0 050 702).

Die präparierte Nahrungsmittelhülle kann als flachgelegter Schlauch als Abschnitt oder von der Rolle zum Füllen mit Füllgut eingesetzt werden. Es lassen sich auch geraffte Schlauchhüllen, sogenannte Raupen, herstellen, wobei man übliche Raffvorrichtungen (US-A-3 988 804) einsetzt.

Erfindungsgemäß werden die Nahrungsmittelhüllen auf ihrer inneren und/oder äußeren Oberfläche mit einer modifizierten Flüssigrauchlösung präpariert, welche selbst auch Gegenstand der Erfindung ist. Die modifizierte Flüssigrauchlösung enthält unverdünnte, nichtmodifizierte, wäßrige Flüssigrauchlösung in ihrer derzeit handelsüblichen Form. Diese handelsübliche Flüssigrauchlösung ist eine Lösung natürlicher Holzrauchbestandteile, die durch Verbrennen von Holz, beispielsweise Hickory-Nußbaum oder Ahorn, und Auffangen der natürlichen Rauchbestandteile in einem flüssigen Medium, z. B. Wasser, hergestellt wird. Es ist auch möglich, den zu verwendenden flüssigen Rauch durch Trockendestillation von Holz zu gewinnen. Flüssige Rauchlösungen sind im allgemeinen stark sauer und haben gewöhnlich einen pH-Wert von 2,5 oder weniger, jedoch sind auch einige teilweise neutralisierte flüssige Rauchlösungen mit einem pH-Wert bis etwa 5 erhältlich, welche dann zusätzlich ein Lösungsmittel enthalten, um die Flüssigrauchbestandteile in Lösung zu halten.

Für die Zwecke der Erfindung wird eine Flüssigrauchlösung bevorzugt, die eine Lösung von natürlichen Holzrauchbestandteilen ist. Diese Lösung wird durch unvollständige Verbrennung von Hartholz und Absorption des hierbei erzeugten Rauchs in einer wäßrigen Lösung unter geregelten Bedingungen hergestellt. Durch die begrenzte Verbrennung wird das Entstehen von Benzpyren minimiert, und es werden einige der unerwünschten Kohlenwasserstoffverbindungen oder Teere in unlöslicher Form gehalten, so daß diese Bestandteile aus der endgültigen flüssigen Rauchlösung entfernt werden können. Bei dieser Arbeitsweise werden somit die erwünschten Holzbestandteile in der Lösung in einem ausgewogenen Mengenverhältnis absorbiert, während die unerwünschten Bestandteile entfernt werden können. Die hierbei gewonnene flüssige Rauchlösung enthält die farbgebenden und geschmacksbildenden Rauchbestandteile in gelöster Form und ist repräsentativ für das gesamte Spektrum von Räucherfarben und Rauchgeschmacksnoten ohne Bevorzugung eines bestimmten Typs. Die Vorrichtungen und das Verfahren zur Herstellung von flüssigen Rauchlösungen des bevorzugten Typs werden ausführlicher in US-A-3 106 473 und US-A-3 873 741 beschrieben.

Die nichtmodifizierte Flüssigrauchlösung ist in der Gesamtmischung in einer Menge von mindestens 30 Gew.-% enthalten, wobei der Bereich von 35 bis 60 Gew.-% bevorzugt ist, insbesondere 40 bis 50 Gew.-%, jeweils bezogen auf das Gesamtgewicht der Mischung.

Als alkalische Neutralisationsmittel eignen sich für die Zwecke der Erfindung alle bekannten wasserlöslichen alkalischen Materialien, z. B. Kaliumhydroxid, Natriumhydroxid, Ammoniumhydroxid, Natriumcarbonat, Natriumbicarbonat, Natriumphosphat, Dinatriumhydrogenphosphat und Trinatriumphosphat. Die alkalischen Materialien können in fester Form oder als konzentrierte Lösung zugesetzt werden. Die Verwendung der stärksten alkalischen Materialien hat den besonderen Vorteil, daß die Konzentration der Rauchbestandteile im Gemisch möglichst hoch gehalten wird.

Die in der Gesamtmischung vorhandene Menge des alkalischen Neutralisationsmittels hängt weitgehend von der Acidität und Zusammensetzung der zu neutralisierenden jeweiligen handelsüblichen flüssigen Rauchlösung und dem jeweils verwendeten Neutralisationsmittel ab: Das Neutralisationsmittel wird in solchen Mengen zugegeben (als Lösung oder als Feststoff), daß der pH-Wert der Mischung im Bereich von 8,5 bis 14, bevorzugt 8,5 bis 12, liegt.

Als viskositätserhöhende Komponente kommen grundsätzlich Cellulose- oder Stärkederivate (z. B. CMC, Hydroxy-methyl- oder -ethyl-Stärke) in Frage, bevorzugt werden Alginate eingesetzt. Alginate sind Salze der Alginsäure, insbesondere Alkali- oder Erdalkalisalze. Alginsäure selbst ist ein farbloses, Carboxylgruppen enthaltendes Polysaccharid mit einem mittleren Molekulargewicht zwischen 100 000 und 240 000. Chemisch besteht Alginsäure aus β-glykosidisch 1,4-ver-knüpften D-Mannuronsäureeinheiten mit gelegentlichen Einschüben von α-glykosidisch 1,4-gebundenen L-Guluronsäureeinheiten. Alginsäure als solche ist ein Naturprodukt und findet sich in beträchtlichen Mengen in den Braunalgen des Meeres.

Für den gewünschten viskositätserhöhenden Effekt sollte die Mischung mindestens 0,5 Gew.-% der Alginate enthalten. Der Bereich von 1 bis 3 Gew.-% ist bevorzugt, insbesondere 1,5 bis 2,5 Gew.-%. Die Viskosität (gemessen als Auslaufzeit im Ford-4-Becher in Sekunden) der nichtmodifizierten Rauchlösung von 8 bis 12 s erhöht sich durch dieses Zusatzmittel auf 130 bis 300 cSt (40 bis 80 s), bevorzugt 180 bis 230 cSt (50 bis 65 s).

Überraschenderweise wird durch diese Viskositätserhöhung der Flüssigrauchlösung eine wesentlich größere Menge an Rauchlösung an der inneren und/oder äußeren Oberfläche der Nahrungsmittelhülle festgehalten, und es können geeignete Bestandteile der Mischung wesentlich besser in den Hüllenquerschnitt diffundieren. Diese Erhöhung der Auftragsmenge der Flüssigrauchlösung ist für die erfindungsgemäßen Verbesserungen wesentlich und trägt entscheidend zur verbesserten Übertragung von Räucheraroma und -farbe bei. Insbesondere im angegebenen Bereich von 1 bis 3 Gew.-% erhöht sich die Auftragsmenge an Flüssigrauchlösung besonders effektiv, wobei sie sich gleichzeitig sehr gut auf der Oberfläche verteilen läßt.

Weiterhin trägt der Zusatz einer Ölkomponente zu den eingangs genannten gewünschten Verbesserungen bei. Insbesondere die Aufnahme und Übertragung der färbenden Aromabestandteile des Flüssigrauchs durch die Cellulosehülle konnte hierdurch überraschend verbessert werden. Grundsätzlich sind die verschiedensten Öle geeignet, z. B. natürliche Öle wie Olivenöl oder Rapsöl, Sonnenblumenöl, Lecithin oder synthetische Mono-, Di- und Triglyceride, Paraffinöl, Siliconöle. Unter den Glyceriden werden solche mit 7 bis 12 C-Atomen, insbesondere mit 8 bis 10 C-Atomen, im Fettsäurerest bevorzugt. Als ganz besonders vorteilhaft hat sich eine Ausführungsform mit Lecithin als Ölkomponente erwiesen.

Lecithin gehört zu den Phosphatiden, bei denen die Phosphorsäure einerseits mit Cholin und andererseits mit Glycerin verestert ist, wobei die übrigen Hydroxylgruppen des Glycerins selbst wieder mit langkettigen Fettsäuren verestert sind. Lecithin als solches ist ein Naturprodukt, und man erhält bei seiner Extraktion aus biologischem Material fast immer Gemische, bedingt durch die Verschiedenheit der Fettsäurereste.
Die Öle werden der Flüssigrauchlösung in einer Menge von 2 bis 30 Gew.-%, bezogen auf das Gesamtgewicht der Mischung, zugesetzt, wobei 5 bis 20 Gew.-%, insbesondere 10 bis 15 Gew.-%, bevorzugt sind.

Zum Emulgieren der Zusatzstoffe können die üblichen Emulgatoren, z. B. Alkylsulfonate, Alkylarylsulfonate, Alkylsulfate, Alkylarylsulfate oder nichtionogene Emulgatoren wie ethoxylierte Alkohole oder Amine, zugegeben werden.
Auch Monofettsäureester oder mehrwertige Alkohole wie Sorbitmonoester oder Alkandiole wie 1,2-Propandiol sind als Emulgatoren geeignet. Die Emulgatoren werden in Mengen von 0,5 bis 15 Gew.-%, bevorzugt 1 bis 5 Gew.-%, bezogen auf das Gewicht der Präparationslösung, zugesetzt. Es hat sich überraschenderweise gezeigt, daß der Zusatz der Emulgatoren in der Flüssigrauchlösung eine außerordentlich gleichmäßige Auftragung derselben ermöglicht. Zusätzlich wird die Diffusion der Rauchbestandteile in das Hüllenmaterial verbessert.

Neben den genannten Zusätzen können weitere übliche Zusatzstoffe in jeweils wirksamen Mengen verwendet werden.

Die flüssigrauchpräparierten Hüllen weisen bevorzugt einen relativ hohen Feuchtegehalt auf, um deren wässerungsfreie Verarbeitung zu ermöglichen. Für faserverstärkte Cellulosehydrathüllen ist ein Feuchtegehalt von über 22 Gew.-% bevorzugt, kleinere Cellulosehydrathüllen ohne Faserverstärkung haben einen bevorzugten Feuchtegehalt von 15 bis 20 Gew.-%.

Da die präparierte Nahrungsmittelhülle wässerungsfrei verarbeitet wird, sind Ausführungsformen mit einer fungiciden Außenpräparation bevorzugt, die entweder vor oder nach der Flüssigrauchpräparation vorgenommen wird. Solche fungiciden Präparationen enthalten bevorzugt heterocyclische Verbindungen wie Benzimidazol- oder Isothiazolonverbindungen oder Di-n-decylammonium-Verbindungen. Letztere werden bevorzugt als Mischung mit einem weiteren fungiciden Mittel, beispielsweise einem Salz der Sorbinsäure und/oder einer Isothiazolonverbindung und/oder Glycerinmonolaurat, eingesetzt. Diese bevorzugten fungiciden Präparationen sind in der EP-A-0 378 069 beschrieben.

Nahrungsmittelhüllen, welche erfindungsgemäß mit der modifizierten Flüssigrauchlösung präpariert werden, sind nach üblichen an sich bekannten Verfahren für Cellulosehydrathüllen hergestellt.

Außer den üblichen glycerinhaltigen haben sich alginathaltige, glycerinfreie faserverstärkte Cellulosehydratschläuche wie in der DE-A-40 02 083 beschrieben für dieses Einsatzgebiet besonders bewährt. Sie gewährleisten eine noch bessere gleichbleibende Auftragsmenge, weil sich in der Präparationslösung kein Glycerin anreichern kann, und sie haben günstigere Übertragungseigenschaften, weil dabei das Glycerin ebenfalls nicht stören kann.

Gegebenenfalls kann die Nahrungsmittelhülle mit einer üblichen Eiweißimprägnierung auf ihrer inneren Oberfläche versehen werden. Geeignet sind grundsätzlich alle gängigen natürlichen Eiweißverbindungen tierischen oder pflanzlichen Ursprungs wie beispielsweise Gelatine, Sojaprotein, Weizen- oder Erdnußprotein. Als besonders vorteilhaft haben sich Eiweißimprägnierungen auf Basis von Casein erwiesen.

Zur Auftragung der modifizierten Rauchlösung werden zunächst getrocknete, gegebenenfalls faserverstärkte Cellulosehydratschläuche mit einem Feuchtgehalt von 8 bis 12 Gew.-% mit Wasser befeuchtet. Die befeuchteten Schläuche werden dann auf ihrer Außen- und/oder Innenseite mit der erfindungsgemäß modifizierten Flüssigrauchlösung und gegebenenfalls auf ihrer Außenseite zusätzlich mit der fungiciden Präparation nach einem der zahlreichen bekannten Verfahren behandelt (GB-A-1 201 830, US-A-2 901 358, DE-A-28 01 038, DE-C-30 12 250).

Der Auftrag der Flüssigrauchlösung auf die Innen- und/oder Außenseite der Schlauchhülle erfolgt vorzugsweise durch Einfüllen der aufzubringenden Flüssigkeitsmischung in die Schlauchhülle oder durch Auftragung auf die äußere Oberfläche nach der Fällung des Cellulosehydrat-Gels aus Viskose und nach der Trocknung, wobei das getrocknete Hüllenmaterial durch die Behandlung mit der modifizierten Flüssigrauchlösung auf die gewünschte bzw. leicht erhöhte Verarbeitungsfeuchte gebracht wird.

Nach der Auftragung der Rauchlösung nach dem beschriebenen Verfahren wird beim anschließenden Trocknungsprozeß in flachgelegtem oder aufgeblasenem Zustand eine Endfeuchte der Hülle eingestellt, welche eine wässerungsfreie Verarbeitung ermöglicht, bevorzugt ist ein Feuchtegehalt von 25 bis 35 Gew.-%, bezogen auf das Trockengewicht der Hülle. Anschliessend wird das Material einseitig zu Wursthüllen abgebunden, vorzugsweise gerafft.

Überraschenderweise gelang es durch einfache Maßnahmen, die Übertragung von Räucheraroma und Räucherfarbe von flüssigrauchpräparierten Hüllen auf das Füllgut wesentlich zu verbessern. Die erfindungsgemäß modifizierten Flüssigrauchlösungen enthalten eine spezielle Kombination an sich bekannter Imprägnierungskomponenten, die in ihrer erfindungsgemäßen Zusammensetzung eine völlig überraschende Verbesserung der wesentlichen Eigenschaften von flüssigrauchpräparierten Hüllen ermöglichen.
Aufgrund der speziellen Rezepturierung wird die Aufnahmemenge an Flüssigrauchlösung durch das Cellulosehydratmaterial stark erhöht, insbesondere glycerinfreie Ausführungsformen der Nahrungsmittelhüllen nehmen die modifizierte Flüssigrauchlösung nahezu vollständig auf. Gleichzeitig läßt sich die Mischung aber auch ganz besonders gleichmäßig auftragen, wodurch unerwünschte Fleckenbildung auf der Oberfläche des Füllgutes vermieden wird. Die gewünschte Übertragung von Räucherfarbe und Räucheraroma auf das Füllgut durch die erfindungsgemäßen Hüllen wurde gegenüber dem Stand der Technik wesentlich verbessert. Die Oberfläche des Füllguts weist eine gleichmäßige und fleckenlose Räucherfarbe auf, und das Füllgut selbst hat einen intensiven Räuchergeschmack. Zusätzlich weist die Hülle die für bestimmte Wurstsorten wünschenswerten guten Trenneigenschaften auf.

Die Erfindung wird durch die folgenden Beispiele näher erläutert, ohne jedoch auf die speziell dargestellten Ausführungsformen beschränkt zu sein.

### Beispiel 1

Eine glycerinfreie, faserverstärkte Cellulosehydrat-Wursthülle von Kaliber 60 mit einer Eiweiß-Innenimprägnierung und einem Ausgangsfeuchtegehalt von 10 bis 12 % wurde durch ein Wasserbad, das als fungicides Mittel 1 % Bardac 22 enthält, geführt. Anschließend wurde die innere Oberfläche der Hülle mit einer Flüssigrauchlösung durch Abquetschen eines sich in der Hülle befindlichen Flüssigkeitspfropfens mittels eines Quetschwalzenpaars imprägniert. Die eingesetzte Flüssigrauchlösung hatte folgende Zusammensetzung:
6 000 ml ®Zesti Smoke Code 10 der Firma Meat Industry Supplies, Inc.
3 600 ml 5 n NaOH
5 000 ml Alginatlösung (6 %)
1 700 ml Lecithin
500 ml ®Genapol x 080

Die imprägnierte Hülle wurde dann nicht getrocknet, sondern mit einem Feuchtegehalt von über 35 % gerafft. Die Nahrungsmittelhülle wurde mit Fleischwurstbrät bzw. Dauerwurstbrät gefüllt. Die Fleischwurst wurde gegart. Die gefüllte Hülle ließ sich sehr gut schälen. Die Brätoberfläche zeigte eine sehr intensive und sehr gleichmäßige Räucherfarbe.

### Beispiel 2

Eine glycerinfreie Cellulosehydrat-Wursthülle mit Faserverstärkung von Kaliber 65 mit einem Ausgangsfeuchtegehalt von 8 bis 10 % wurde wie in Beispiel 1 beschrieben gewässert, fungicid ausgestattet und mit einer Flüssigrauchlösung folgender Zusammensetzung:
4 500 ml ®Smokez Supreme der Firma Red Arrow Products Corp.
2 700 ml 5 n NaOH
800 ml Alginatlösung (6 %)
900 ml Lecithin
250 ml ®Genapol x 080
imprägniert. Die Hülle wurde gerafft und die Raupe 7 Tage im Tropenraum gelagert. Danach konnte die Raupe ohne Probleme wässerungsfrei verarbeitet werden. Die gefüllte Hülle zeigte eine glänzende Oberfläche, ließ sich gut schälen und zeigte eine gute Farbübertragung. Die Wurst hatte einen intensiven Räuchergeschmack.

### Beispiel 3

Eine glycerinhaltige, faserverstärkte Cellulosehydrat-Wursthülle von Kaliber 40 mit einer Ausgangsfeuchte von 10 bis 12 % wurde wie in Beispiel 1 beschrieben behandelt und dann mit der folgenden Flüssigrauchlösung imprägniert:
4 800 ml ®Zesti Smoke TP Special Blend der Firma Meat Industry Supplies, Inc.
4 000 ml Alginat (6 %)
1 000 ml Lecithin
300 ml ®Genapol x 080

Die Hülle ließ sich wässerungsfrei als Abschnitt verarbeiten. Das Füllgut zeigte eine gute und gleichmäßige Räucherfärbung und ein gutes Räucheraroma.

### Beispiel 4

Eine glycerinhaltige, nichtfaserverstärkte Cellulosehydrat-Wursthülle von Kaliber 23 (Schäler) mit einem Ausgangsfeuchtegehalt von 10 bis 12 % wurde analog der Vorgehensweise des Beispiels 1 behandelt und imprägniert, mit Fleischwurstbrät gefüllt, gegart und mit einer schnellaufenden Maschine geschält.

### Beispiel 5

Eine glycerinfreie, faserverstärkte Cellulosehydrathülle von Kaliber 130 mit einer Ausgangsfeuchte von 8 bis 10 % wurde wie in Beispiel 1 beschrieben fungicid ausgerüstet und imprägniert. Sie wurde mit Kochschinken gefüllt, gegart und ließ sich sehr gut schälen. Die Oberfläche des Kochschinkens zeigte eine intensive gleichmäßige Räucherfarbe.

## Patentansprüche

1. Schlauchförmige Nahrungsmittelhülle, insbesondere Wursthülle, auf Basis von Cellulose mit einer auf ihrer inneren und/oder äußeren Oberfläche aufgebrachten modifizierten Flüssigrauchlösung, dadurch gekennzeichnet, daß die modifizierte Flüssigrauchlösung eine Mischung ist, welche
eine nichtmodifizierte wäßrige Flüssigrauchlösung und
ein alkalisches Neutralisationsmittel in einer solchen Menge, daß die
Mischung einen pH-Wert von 8,5 bis 14 hat,
ein synthetisches und/oder natürliches Öl,
eine viskositätserhöhende Komponente und
einen oder mehrere Emulgator/en
enthält.

2. Nahrungsmittelhülle gemäß Anspruch 1, dadurch gekennzeichnet, daß das alkalische Neutralisationsmittel in einer solchen Menge enthalten ist, daß die Mischung einen pH-Wert von 8,5 bis 12 hat.

3. Nahrungsmittelhülle gemäß Anspruch 1 und/oder 2, dadurch gekennzeichnet, daß das natürliche und/oder synthetische Öl in einer Menge von 2 bis 30 Gew.-% enthalten ist.

4. Nahrungsmittelhülle gemäß einem oder mehreren der Ansprüche 1 bis 3, dadurch gekennzeichnet, daß der Emulgator in einer Menge von 0,5 bis 15 Gew.-% enthalten ist.

5. Nahrungsmittelhülle gemäß einem oder mehreren der Ansprüche 1 bis 4, dadurch gekennzeichnet, daß die Viskosität der Mischung in einem Bereich von 130 bis 300 cSt (40 bis 80 s Auslaufzeit aus dem Ford-4-Becher) liegt.

6. Nahrungsmittelhülle gemäß einem oder mehreren der Ansprüche 1 bis 5, dadurch gekennzeichnet, daß die nichtmodifizierte, wäßrige Flüssigrauchlösung in einer Menge von mindestens 30 Gew.-% enthalten ist.

7. Nahrungsmittelhülle gemäß einem oder mehreren der Ansprüche 1 bis 6, dadurch gekennzeichnet, daß auf deren äußerer Oberfläche eine fungicide Außenbeschichtung aufgebracht ist.

8. Nahrungsmittelhülle gemäß einem oder mehreren der Ansprüche 1 bis 7, dadurch gekennzeichnet, daß die präparierte Nahrungsmittelhülle einen Feuchtgehalt von 25 bis 35 Gew.-% aufweist.

9. Nahrungsmittelhülle gemäß einem oder mehreren der Ansprüche 1 bis 8, dadurch gekennzeichnet, daß die modifizierte Flüssigrauchlösung ein natürliches Öl, bevorzugt Lecithin, enthält.

10. Nahrungsmittelhülle gemäß einem oder mehreren der Ansprüche 1 bis 9, dadurch gekennzeichnet, daß die modifizierte Flüssigrauchlösung als viskositätserhöhende Komponente ein Alginat enthält.

11. Verfahren zur Herstellung einer flüssigrauchpräparierten Nahrungsmittelhülle gemäß einem der Ansprüche 1 bis 10, dadurch gekennzeichnet, daß die getrocknete Cellulosehydrathülle mit Wasser befeuchtet, gegebenenfalls fungicid imprägniert, anschließend mit der modifizierten Flüssigrauchlösung präpariert und zuletzt schwach getrocknet wird, so daß ein Endfeuchtegehalt eingestellt wird, der eine wässerungsfreie Verarbeitung ermöglicht.

12. Verfahren nach Anspruch 11, dadurch gekennzeichnet, daß die Nahrungsmittelhülle gerafft ist.

13. Modifizierte wäßrige Flüssigrauchlösung, dadurch gekennzeichnet, daß ein alkalisches Neutralisationsmittel in einer solchen Menge, daß der pH-Wert der Mischung im Bereich von 8,5 bis 14 liegt, ein synthetisches und/oder natürliches Öl, eine viskositätserhöhende Komponente und ein Emulgator enthalten ist.

14. Modifizierte Flüssigrauchlösung nach Anspruch 13, dadurch gekennzeichnet, daß die Viskosität der Mischung 130 bis 300 cSt (40 bis 80 s Auslaufzeit aus dem Ford-4-Becher) beträgt.

15. Verwendung der Nahrungsmittelhülle nach einem oder mehreren der Ansprüche 1 bis 10 zur Herstellung geräucherter Wurst.

## Claims

1. A tubular food casing, in particular sausage casing, based on cellulose having a modified liquid smoking solution applied to its inner and/or outer surface, wherein the modified liquid smoking solution is a mixture which contains
an unmodified aqueous liquid smoking solution and
an alkaline neutralizing agent in an amount such that the mixture has a pH of 8.5 to 14,
a synthetic and/or natural oil,
a viscosity-increasing component and
one or more emulsifier(s).

2. The food casing as claimed in claim 1, wherein the alkaline neutralizing agent is contained in an amount such that the mixture has a pH of 8.5 to 12.

3. The food casing as claimed in claim 1 and/or 2, wherein the natural and/or synthetic oil is contained in an amount of 2 to 30 % by weight.

4. The food casing as claimed in one or more of claims 1 to 3, wherein the emulsifier is contained in an amount of 0.5 to 15 % by weight.

5. The food casing as claimed in one or more of claims 1 to 4, wherein the viscosity of the mixture is in a range from 130 to 300 cSt (40 to 80 s efflux time from the Ford 4 cup).

6. The food casing as claimed in one or more of claims 1 to 5, wherein the unmodified, aqueous liquid smoking solution is contained in an amount of at least 30 % by weight.

7. The food casing as claimed in one or more of claims 1 to 6, wherein a fungicidal external coating is applied to the outer surface of the casing.

8. The food casing as claimed in one or more of claims 1 to 7, wherein the prepared food casing has a moisture content of 25 to 35 % by weight.

9. The food casing as claimed in one or more of claims 1 to 8, wherein the modified liquid smoking solution contains a natural oil, preferably lecithin.

10. The food casing as claimed in one or more of claims 1 to 9, wherein the modified liquid smoking solution contains an alginate as viscosity-increasing component.

11. A process for the production of a food casing prepared using liquid smoke as claimed in any one of claims 1 to 10, which comprises moistening the dried cellulose hydrate casing with water, impregnating it or not with fungicide, subsequently preparing it using the modified liquid smoking solution and finally drying it slightly so that a final moisture content is established which enables processing without soaking.

12. The process as claimed in claim 11, wherein the food casing is shirred.

13. A modified aqueous liquid smoking solution which contains an alkaline neutralizing agent in an amount such that the pH of the mixture is in the range from 8.5 to 14, a synthetic and/or natural oil, a viscosity-increasing component and an emulsifier.

14. The modified liquid smoking solution as claimed in claim 13, wherein the viscosity of the mixture is 130 to 300 cSt (40 to 80 a efflux time from the Ford 4 cup).

15. Use of the food casing as claimed in one or more of claims 1 to 10 for the production of smoked sausage.

## Revendications

1. Enveloppe pour produits alimentaires en forme de boyau, en particulier enveloppe pour saucisses, à base de cellulose, comportant une solution de fumée liquide modifiée, appliquée sur sa face interne et/ou sa face externe, caractérisée en ce que la solution de fumée liquide modifiée est un mélange qui contient
une solution aqueuse de fumée liquide non modifiée et
un agent de neutralistion alcalin, en une quantité telle que le mélange présente un pH de 8,5 à 14,
une huile synthétique et/ou une huile naturelle,
un composant augmentant la viscosité et
un ou plusieurs émulsifiants.

2. Enveloppe pour produits alimentaires selon la revendication 1, caractérisée en ce que l'agent de neutralisation alcalin est contenu en une quantité telle que le mélange a un pH de 8,5 à 12.

3. Enveloppe pour produits alimentaires selon la revendication 1 et/ou la revendication 2, caractérisée en ce que l'huile naturelle et/ou l'huile synthétique est (sont) contenue(s) en une proportion de 2 à 30 % en poids.

4. Enveloppe pour produits alimentaires selon une ou plusieurs des revendications 1 à 3, caractérisée en ce que l'émulsifiant est contenu en une proportion de 0,5 à 15 % en poids.

5. Enveloppe pour produits alimentaires selon une ou plusieurs des revendication 1 à 4, caractérisée en ce que la viscosité du mélange se situe dans une plage allant de 130 à 300 centistokes (40 à 80 s de temps d'écoulement du godet Ford-4).

6. Enveloppe pour produits alimentaires selon une ou plusieurs des revendication 1 à 5, caractérisée en ce que la solution aqueuse de fumée liquide non modifiée est contenue en une proportion d'au moins 30 % en poids.

7. Enveloppe pour produits alimentaires selon une ou plusieurs des revendication 1 à 6, caractérisée en ce qu'un revêtement externe fongicide est appliqué sur sa face externe.

8. Enveloppe pour produits alimentaires selon une ou plusieurs des revendication 1 à 7, caractérisée en ce que l'enveloppe pour produits alimentaires préparée présente une teneur en eau de 25 à 35 % en poids.

9. Enveloppe pour produits alimentaires selon une ou plusieurs des revendication 1 à 8, caractérisée en ce que la solution de fumée liquide modifiée contient une huile naturelle, de préférence la lécithine.

10. Enveloppe pour produits alimentaires selon une ou plusieurs des revendication 1 à 9, caractérisée en ce que la solution de fumée liquide modifiée contient un alginate en tant que composant augmentant la viscosité.

11. Procédé pour la fabrication d'une enveloppe pour produits alimentaires préparée à l'aide de fumée liquide, selon l'une des revendication 1 à 10, caractérisé en ce que l'enveloppe à base d'hydrate de cellulose séchée est humectée avec de l'eau, éventuellement imprégnée avec un fongicide, ensuite préparée avec la solution de fumée liquide modifiée, et enfin légèrement séchée, de sorte qu'est établie une teneur finale en eau permettant une mise en oeuvre sans hydratation.

12. Procédé selon la revendication 11, caractérisé en ce que l'enveloppe pour produits alimentaires est plissée.

13. Solution aqueuse de fumée liquide modifiée, caractérisée en ce qu'elle contient un agent de neutralisation alcalin, en une quantité telle que le pH du mélange se situe dans la plage allant de 8,5 à 14, une huile naturelle et/ou une huile synthétique, un composant augmentant la viscosité et un émulsifiant.

14. Solution de fumée liquide modifiée selon la revendication 13, caractérisée en ce que la viscosité du mélange est de 130 à 300 centistokes (40 à 80 s de temps d'écoulement du godet Ford-4).

15. Utilisation de l'enveloppe pour produits alimentaires selon une ou plusieurs des revendication 1 à 10, pour la fabrication de saucisse fumée.
